# EUROPÄISCHE PATENTSCHRIFT

(11) **EP 4 042 861 B1**
(45) Veröffentlichungstag und Bekanntmachung des Hinweises auf die Patenterteilung: **20.12.2023**
(21) Anmeldenummer: 21156954.6
(22) Anmeldetag: 12.02.2021
(51) Int. Cl.: A01G 20/47, F04D 29/70, F04D 29/66

(54) **SCHUTZVORRICHTUNG FÜR EINEN ANSAUG- ODER BLASKANAL EINES ARBEITSGERÄTES UND ARBEITSGERÄT MIT EINER SCHUTZVORRICHTUNG**
PROTECTION DEVICE FOR A SUCTION OR BLOWING CHANNEL OF A WORKING DEVICE AND WORKING DEVICE WITH A PROTECTIVE DEVICE
DISPOSITIF DE PROTECTION POUR UN CANAL D'ADMISSION OU DE SOUFFLAGE D'UN APPAREIL DE TRAVAIL ET APPAREIL DE TRAVAIL DOTÉ D'UN DISPOSITIF DE PROTECTION

(43) Veröffentlichungstag der Anmeldung: 17.08.2022
(73) Patentinhaber: Andreas Stihl AG & Co. KG, 71336 Waiblingen (DE)
(72) Erfinder: SEIZ, Jonathan, D-70376 Stuttgart (DE); JUNKER, Sebastian, D-71634 Ludwigsburg (DE)
(74) Vertreter: Karzel, Philipp

(56) Entgegenhaltungen:
- EP-A1- 2 444 552
- EP-A1- 3 771 331
- WO-A1-89/04135
- WO-A1-2016/188583
- DE-A1-102019 101 077
- US-A1- 2020 221 651

## Beschreibung

Die Erfindung betrifft eine Schutzvorrichtung für einen Ansaug- oder Blaskanal eines Arbeitsgerätes gemäß dem Oberbegriff des Anspruchs 1. Des Weiteren betrifft die Erfindung ein Arbeitsgerät mit einer Schutzvorrichtung.

Es sind handgeführte Arbeitsgeräte, insbesondere Blasgeräte oder Saughäcksler bekannt, die zum Wegblasen bzw. zum Aufsaugen und Häckseln von Grünzeug wie Laub etc. dienen. Derartige Arbeitsgeräte umfassen ein Gebläse, das zur Erzeugung eines Luftstromes dient. Der Luftstrom strömt über eine Ansaugöffnung am Gehäuse in das Gebläse ein und über eine Ausblasöffnung wieder aus. An den Öffnungen sind gitterartige Schutzvorrichtungen vorgesehen, wodurch ein Eingreifen in die entsprechenden Öffnungen und der versehentliche Kontakt mit beweglichen oder heißen Antriebs- oder Motorteilen vermieden werden. Im Betrieb derartiger Arbeitsgeräte können erhöhte Geräuschpegel entstehen, die für den Bediener äußerst störend sind.

Das Dokument WO 89/04135 A1 offenbart eine Schutzvorrichtung des Standes der Technik für einen Ansaug- oder Blaskanal eines Arbeitsgerätes.

Demnach liegt der Erfindung die Aufgabe zugrunde, eine Schutzvorrichtung für einen Ansaug- oder Blaskanal eines Arbeitsgerätes der gattungsgemäßen Art derart weiter zu entwickeln, dass der Betrieb des Arbeitsgerätes bei einem lediglich niedrigen Geräuschpegel ermöglicht ist.

Diese Aufgabe wird durch eine Schutzvorrichtung nach den Merkmalen des Anspruchs 1 gelöst.

Der Erfindung liegt eine weitere Aufgabe zugrunde, nämlich ein Arbeitsgerät der gattungsgemäßen Art derart weiter zu entwickeln, dass der Betrieb des Arbeitsgerätes bei geringem Geräuschpegel ermöglicht ist.

Diese Aufgabe wird durch ein Arbeitsgerät nach den Merkmalen des Anspruchs 15 gelöst.

Dem Erfindungsgedanken liegt die Erkenntnis zugrunde, dass die Geräuschemissionen, die im Betrieb des aus dem Stand der Technik bekannten Arbeitsgerätes entstehen, zumindest teilweise durch die an dem Arbeitsgerät vorgesehenen Schutzgitter verursacht sind. Strömt Luft durch das Gitter, wird dieses fremderregt und beginnt zu schwingen. Entspricht die durch die Strömung bedingte Erregerfrequenz einer Eigenfrequenz der angeregten Gitterstruktur, liegt eine Resonanz vor. Die Resonanzschwingung erzeugt eine Geräuschemission, die durch den Bediener als äußerst störend wahrgenommen wird.

Die erfindungsgemäße Schutzvorrichtung für einen Ansaug- oder Blaskanal eines Arbeitsgerätes umfasst mindestens eine Rippe mit einer Längsrichtung. Die mindestens eine Rippe weist mindestens einen Rippenabschnitt auf, wobei sich der Rippenabschnitt entlang der Längsrichtung der Rippe von einem ersten Ende bis zu einem zweiten Ende erstreckt und für sich alleine genommen eine Eigenfrequenz aufweist. An dem Rippenabschnitt ist zwischen dem ersten Ende und dem zweiten Ende ein mit dem Rippenabschnitt translatorisch schwingbarer Störkörper angeordnet. Als ein translatorisch schwingbarer Störkörper ist ein Störkörper zu verstehen, der zumindest translatorisch schwingen kann. Es ist auch möglich, dass der translatorische schwingbare Störkörper zusätzlich auch rotatorisch schwingbar ist. Der Rippenabschnitt und der Störkörper bilden ein Schwingungssystem mit einer Systemeigenfrequenz. Die Systemeigenfrequenz und die Eigenfrequenz des Rippenabschnitts sind verschieden.

Der Störkörper bewirkt eine Eigenfrequenzverschiebung. Liegt die Eigenfrequenz des Rippenabschnitts noch in einem Resonanzbereich, so wird durch die Anordnung des Störkörpers auf dem Rippenabschnitt ein Schwingungssystem gebildet, dessen Eigenfrequenz außerhalb der Erregerfrequenz und damit außerhalb des Resonanzbereiches liegt. Die Schwingungen des Rippenabschnitts mit Störkörper sind reduziert, wodurch auch die Geräuschemissionen reduziert sind.

Es ist vorteilhaft vorgesehen, dass die Schutzvorrichtung als ein Schutzgitter ausgebildet ist und mindestens eine weitere Rippe umfasst, wobei sich die weitere Rippe und die mindestens eine Rippe in einem Verbindungspunkt schneiden. Der Verbindungspunkt bildet für die daran angrenzenden Rippenabschnitte einen Einhängepunkt, der translatorisch fixiert ist. Damit ist der Verbindungspunkt translatorisch nicht schwingbar. Die weitere Rippe ist vorzugsweise quer, insbesondere orthogonal zu mindestens einer Rippe ausgerichtet. Dadurch wird eine besonders steife Rippenanordnung erzeugt.

Es ist bevorzugt vorgesehen, das durch den Verbindungspunkt die mindestens eine Rippe in einen ersten Rippenabschnitt und in einem zweiten Rippenabschnitt und die weitere Rippe in einem oberen Rippenabschnitt und einem unteren Rippenabschnitt unterteilt ist. Bevorzugt ist an zwei, vorzugsweise drei, insbesondere vier Rippenabschnitten der Schutzvorrichtung jeweils mindestens ein Störkörper vorgesehen. Dadurch entstehen vier Schwingungssysteme, deren Eigenfrequenz verschieden gegenüber den jeweiligen Rippenabschnitten ist. Die Rippenabschnitte einer Rippe weisen vorzugsweise verschieden viele Störkörper auf. Der Verbindungspunkt ist per se translatorisch nicht bewegbar. Der Verbindungspunkt kann allerdings ggf. rotatorisch schwingen. Somit können sich zwei zueinander benachbarte Rippenabschnitte durchaus über den Verbindungspunkt in ihrem Schwingverhalten gegenseitig beeinflussen. Umfassen die Rippenabschnitte hingegen verschieden viele Störkörper, sind die verschiedenen Schwingungssysteme ebenfalls in ihrer Eigenfrequenz zueinander verschieden. Dadurch wirken benachbarte Schwingungssysteme aufeinander schwingungsreduzierend.

Vorzugsweise weisen die Störkörper verschieden große Massen auf. Somit kann die Masse des Schwingsystems über die Anzahl der Störkörper auf einem Rippenabschnitt oder über die Masse einzelner Störkörper verändert werden. Somit können die Eigenfrequenzen insbesondere benachbarter Schwingsysteme derart manipuliert werden, dass sich die Schwingungen der Schwingsystems gegenseitig zumindest reduzieren oder auslöschen.

Es ist vorteilhaft vorgesehen, dass die Störkörper zweier Rippenabschnitte einer Rippe bezüglich einer orthogonal zur Rippe ausgerichteten und den Verbindungspunkt schneidenden Ebene asymmetrisch zueinander angeordnet sind. Bei der Veränderung der Eigenfrequenz eines Schwingsystems ist auch die Lage des Störkörpers auf dem jeweiligen Rippenabschnitt von Bedeutung. Die Rippenabschnitte schwingen je nach Erregerfrequenz in verschiedenen Moden. Dabei entspricht die Grundschwingung eines Rippenabschnittes der ersten Harmonischen. Der Rippenabschnitt kann jedoch auch in der zweiten Harmonischen, dritten Harmonischen usw. schwingen. Je nach Schwingungsform ist die Position des Störkörpers auf dem Rippenabschnitt von großer Bedeutung. Weisen zwei Rippenabschnitte die gleiche Schwingung auf, so ändert sich die Eigenfrequenz des jeweiligen Schwingungssystems bereits durch die unterschiedliche Positionierung eines Störkörpers auf dem Rippenabschnitt. Durch die hier asymmetrische Anordnung der Störkörper zueinander werden verschiedene Eigenfrequenzen der Schwingungssysteme erzeugt und ein gemeinsames Miteinanderschwingen der Rippenabschnitte vermieden.

Vorzugsweise weist die Rippe eine Oberseite und eine der Oberseite gegenüberliegende Unterseite auf, wobei bevorzugt ein Störkörper des einen Rippenabschnitts einer Rippe auf der Oberseite und ein Störkörper des anderen Rippenabschnittes derselben Rippe auf der Unterseite angeordnet sind. Durch die Anordnung zweier Störkörper auf verschiedenen Seiten einer Rippe wird der Massenschwerpunkt des jeweiligen Schwingsystems verändert. Dadurch weisen die entsprechenden Schwingsysteme unterschiedliche Schwingungseigenschaften auf.

Die Masse des Störkörpers entspricht vorzugsweise mindestens zu 2%, insbesondere mindestens 5%, vorzugsweise in etwa 8% der Masse der Rippe. Je höher die Masse des Störkörpers ist, desto größer ist der Einfluss des Störkörpers auf die Eigenfrequenz des Schwingungssystems aus Störkörper und Rippenabschnitt.

Der Störkörper ist vorzugsweise derart auf dem Rippenabschnitt angeordnet, dass in Blickrichtung senkrecht auf die Oberseite der Rippe der Störkörper innerhalb der Rippe angeordnet ist. In einer alternativen Ausführung kann es auch zweckmäßig sein, den Störkörper derart auf dem Rippenabschnitt anzuordnen, dass dieser über die Rippe hinausragt.

Der Störkörper erstreckt sich in einer Längsrichtung, wobei die Längsenden des Störkörpers vorteilhaft aerodynamisch abgerundet sind. Dadurch wird der Widerstand gegenüber der Luftströmung reduziert.

Die Rippe und der mindestens eine Störkörper sind vorteilhaft einteilig ausgebildet. Die einteilige Ausbildung lässt eine einfache Fertigung der Schutzvorrichtung zu. Die Rippe und der Störkörper bestehen vorzugsweise aus dem gleichen Material, insbesondere aus Kunststoff. Vorzugsweise sind Rippe und Störkörper in Form eines Spritzgusses hergestellt.

Weitere Merkmale der Erfindung ergeben sich aus der Zeichnung, in der nachfolgend ein im Einzelnen beschriebenes Ausführungsbeispiel der Erfindung dargestellt ist. Es zeigen:
- Fig. 1: in perspektivischer Darstellung das erfindungsgemäße handgeführte Arbeitsgerät mit Schutzgitter an der Ansaugöffnung,
- Fig. 2: in schematischer Seitendarstellung das handgeführte Arbeitsgerät mit Ansauggittern an den Ansaug- und Ausblasöffnungen,
- Fig. 3: in perspektivischer Darstellung das handgeführte Arbeitsgerät nach Fig. 1 von hinten,
- Fig. 4: in einer ausschnittsweisen, perspektivischen Darstellung das Arbeitsgerät nach Fig. 1 in demontiertem Zustand mit Schutzvorrichtung an der Ausblasöffnung,
- Fig. 5: in Darstellung von vorne die Schutzvorrichtung an der Ausblasöffnung des Arbeitsgerätes nach Fig. 1,
- Fig. 6: in schematischer Schnittdarstellung die Schutzvorrichtung entlang der Pfeile VI nach Fig. 5,
- Fig. 7: in schematischer Schnittdarstellung die Schutzvorrichtung entlang der Pfeile VI nach Fig. 5 in alternativer Ausführung,
- Fig. 8: in einer Darstellung von unten das Arbeitsgerät nach Fig. 1 mit Schutzgitter an der Ansaugöffnung,
- Fig. 9: in einer perspektivischen Darstellung das Schutzgitter an der Ansaugöffnung des Arbeitsgerätes nach Fig. 1.

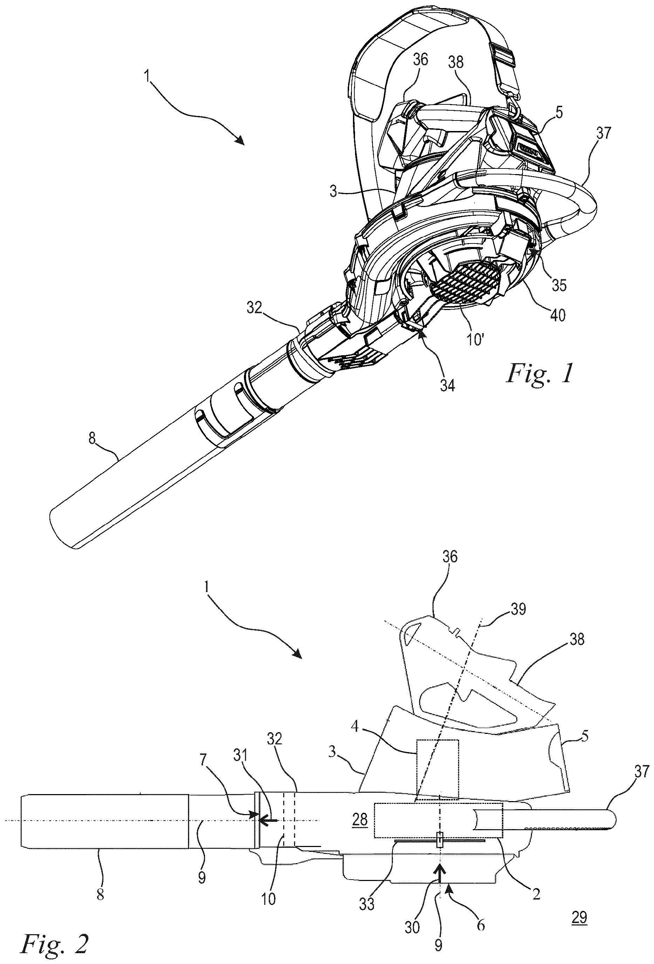

Fig. 1 zeigt in perspektiver Darstellung ein Arbeitsgerät 1. Das Arbeitsgerät 1 ist im Ausführungsbeispiel als ein Saug-/Blasgerät ausgebildet. Demnach kann das Arbeitsgerät 1 sowohl in einem Saugmodus als auch in einem Blasmodus betrieben werden. Saugmodus und Blasmodus sind verschiedene Arbeitsmodi des Arbeitsgerätes 1.

Wie in Fig. 2 in einer schematischen Darstellung gezeigt, umfasst das Arbeitsgerät 1 ein Gehäuse 3, wobei das Gehäuse 3 einen Antriebsmotor 4 und ein Gebläse 2 umfasst. Der Antriebsmotor 4 treibt ein im Gebläse 2 angeordnetes, nicht näher dargestelltes Gebläserad rotierend an. Im Ausführungsbeispiel ist der Antriebsmotor 4 als Elektromotor ausgeführt. Der Elektromotor ist insbesondere von einem Akku 5 mit Energie versorgt. Der Akku 5 ist in einem zur Gehäuseaußenseite hin offenen Akkuschacht geführt, so dass der Akku 5 einfach ohne Öffnen des Gehäuses 3 ausgetauscht werden kann. Der Elektromotor kann jedoch auch über eine elektrische Leitung mit Energie versorgt werden. Es kann auch vorgesehen sein, dass das Gebläse 2 über einen Verbrennungsmotor, insbesondere über einen Zweitaktmotor oder einen gemischgeschmierten Viertaktmotor, angetrieben wird.

Wie in Fig. 2 gezeigt, saugt im Betrieb des Arbeitsgerätes 1 das Gebläse 2 Luft über eine Ansaugöffnung 6 an und bläst sie über eine Ausblasöffnung 7 aus. Hierbei passiert ein Luftstrom 9 die Ansaugöffnung 6 in einer ersten Strömungsrichtung 30. Der Luftstrom 30 strömt von einer Außenumgebung 29 des Arbeitsgerätes 1 in einen Innenraum 28 des Gehäuses 3 zum Gebläse 2. Im Ausführungsbeispiel ist das Gebläse 2 als ein Radialgebläse ausgebildet. Der Luftstrom 9 wird daher durch das Gebläse 2 von der Ansaugöffnung 6 über eine Gebläsespirale 40 zur Ausblasöffnung 7 umgelenkt. Der Luftstrom 9 verlässt den Innenraum 28 des Gehäuses 3 über die Ausblassöffnung 7 in einer zweiten Strömungsrichtung 31. Die erste Strömungsrichtung 30 und die zweite Strömungsrichtung 31 sind quer zueinander ausgerichtet.

Wie in den Figuren 1 bis 3 gezeigt, umfasst das Arbeitsgerät 1 einen Handgriff 36. Der Handgriff 36 ist am Gehäuse 3 gelagert. Der Handgriff 36 besitzt einen Griffbereich 38 zum Umgreifen des Handgriffes 36. Der Handgriff 36 ist um eine Schwenkachse 39 schwenkbar am Arbeitsgerät 1 gelagert und umfasst für Saug- und Blasmodus jeweils eine Arbeitsstellung. Bei Umbau des Arbeitsgerätes 1 von einem Arbeitsmodus in den Anderen ist auch der Handgriff 36 vorzugsweise um 180° um seine Schwenkachse 39 zu schwenken, um den Bediener eine ergonomische Griffhaltung in dem jeweiligen Arbeitsmodus des Arbeitsgerätes 1 zu ermöglichen.

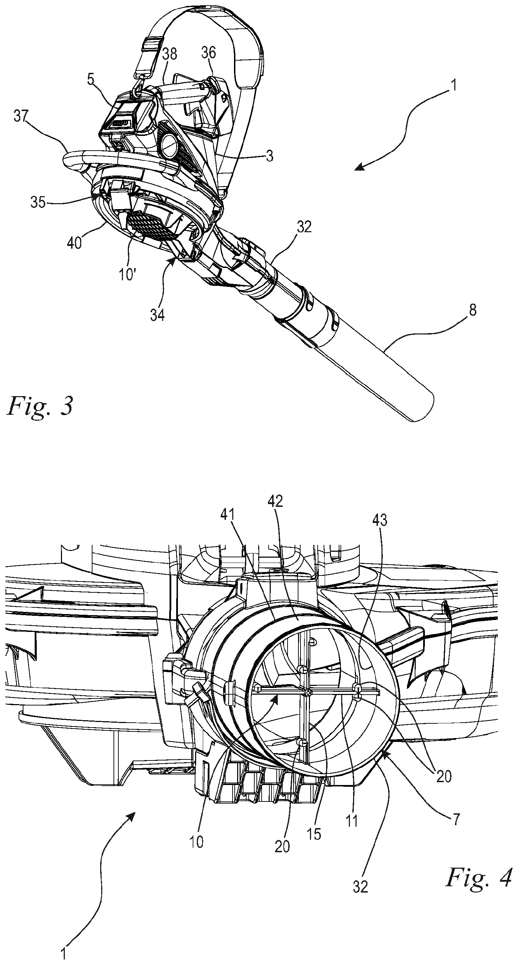

Wie in den Figuren 1 und 3 gezeigt, umfasst das Arbeitsgerät 1 neben dem Handgriff 36 einen Bügelgriff 37. Der Bügelgriff 37 und die Ausblasöffnung 7 sind auf gegenüberliegenden Seiten des Gebläses 2 angeordnet. Dadurch kann die Rückstoßkraft des aus einem Blasrohr 8 austretenden Luftstroms 9 vom Bediener sehr gut mittels des Bügelgriffs 37 aufgenommen werden. Der Bügelgriff 37 ist im Wesentlichen U-förmig ausgebildet. Die beiden Enden des Bügelgriffs 37 sind derart auf gegenüberliegenden Seiten des Arbeitsgerätes 1 festgelegt, dass der Bügelgriff 37 das Gebläse 2 umgreift.

Die Figuren 1 bis 3 zeigen das Arbeitsgerät 1 montiert als Blasgerät. Die Ausblasöffnung 7 ist an einem Montagestutzen 32 vorgesehen, der Teil des Gehäuses 4 ist. In dem Blasmodus des Arbeitsgerätes 1 ist an dem Montagestutzen 32 das Blasrohr 8 angeordnet. Innerhalb des Montagestutzens 32 ist eine erste Schutzvorrichtung 10 vorgesehen (Fig. 4). Die erste Schutzvorrichtung 10 ist in Fig. 2 schematisch angedeutet. Die erste Schutzvorrichtung 10 ist als ein Eingriffsschutz ausgebildet und hindert den Bediener des Arbeitsgerätes 1 daran, über die Ausblasöffnung 7 am Montagestutzen 32 in den Innenraum 28 des Arbeitsgerätes 1 zu greifen.

Wie in den Figuren 1 bis 3 gezeigt, ist im Blasmodus des Arbeitsgerätes 1 an der Ansaugöffnung 6 eine zweite Schutzvorrichtung 10' vorgesehen. Die zweite Schutzvorrichtung 10' ist als ein Gitter ausgebildet, wodurch größere Gegenstände durch das Gitter blockiert nicht in das Gebläse 2 hineingesaugt werden können. Zudem bildet die zweite Schutzvorrichtung 10' auch einen Eingriffsschutz. Dies ist besonders dann von Bedeutung, wenn am Gebläse 2, wie in Fig. 2 schematisch angedeutet, ein Häcksler 33 zum Häckseln von Laub vorgesehen ist. Im Blasmodus des Arbeitsgerätes 1 strömt der Luftstrom 9 von der Außenumgebung 29 über die zweite Schutzvorrichtung 10' die Ansaugöffnung 6 passierend in das Gebläse 2. Anschließend strömt der Luftstrom über die Ausblasöffnung 7 in das Blasrohr 8 und von dort in die Außenumgebung 29.

In dem nicht näher dargestellten Saugmodus des Arbeitsgerätes 1 kann an der Ausblasöffnung 7 statt des Blasrohrs 8 beispielsweise ein Fangsack auf dem Montagestutzen 32 angeordnet sein. Zudem ist an der Ansaugöffnung 6 ein Saugrohr angeordnet. Wie in den Figuren 1 und 2 gezeigt, ist die zweite Schutzvorrichtung 10' über einen Verschluss 34 und ein Drehgelenk 35 am Gehäuse 3 des Arbeitsgerätes 1 schwenkbar befestigt. Zum Umbau des Arbeitsgerätes 1 vom Blasmodus in den Saugmodus ist der Verschluss 34 der zweiten Schutzvorrichtung 10' zu öffnen. Danach kann die zweite Schutzvorrichtung 10' aufgeschwenkt und das Saugrohr auf die Ansaugöffnung 7 aufgesteckt werden. Im Saugmodus des Arbeitsgerätes 1 strömt der Luftstrom 9 durch das Saugrohr und gelangt von dort durch die Ansaugöffnung 6 zum Gebläse 2. Der Luftstrom 9 verlässt das Gebläse 2 in Strömungsrichtung 31 und strömt durch die Ausblasöffnung 7 in den Fangsack ein. Mit dem vom Gebläse 2 erzeugten Luftstrom 9 können Objekte wie beispielsweise Blätter angesaugt werden. Wie im Ausführungsbeispiel gezeigt, kann es vorgesehen sein, dass an dem Gebläse 2 der Häcksler 33 vorgesehen ist, der diese Objekte klein häckselt, so dass sie im Fangsack in kompakter Form gesammelt werden können.

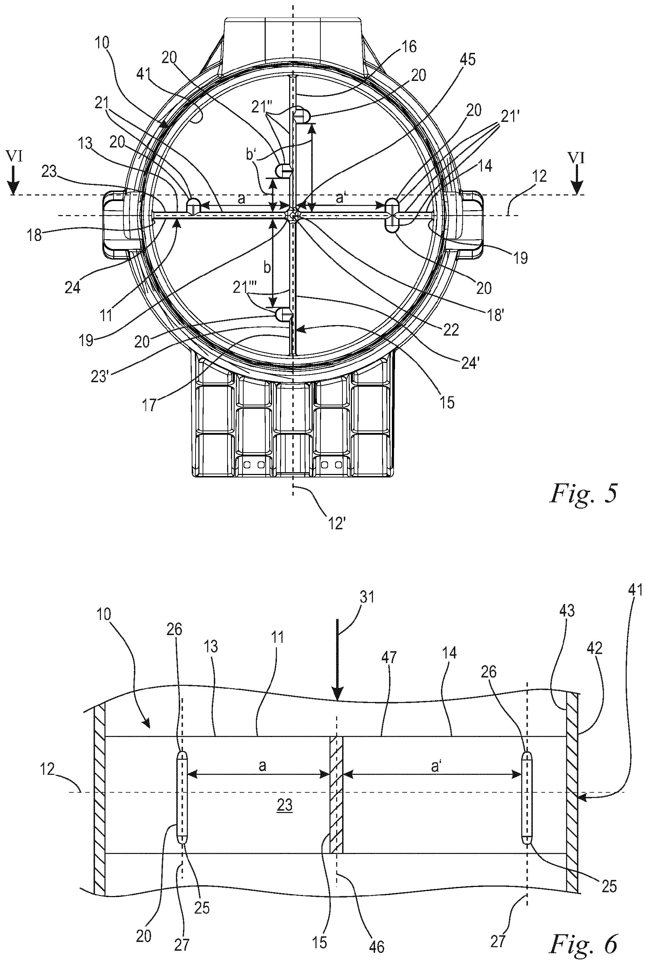

In Fig. 4 ist das Arbeitsgerät 1 ausschnittsweise in demontiertem Zustand gezeigt. Das Blasrohr 8 ist von dem Montagestutzen 32 gelöst. Somit ist die Ausblasöffnung 7 am Montagestutzen 32 sichtbar. Der Montagestutzen 32 ist rohrförmig ausgebildet. Im Ausführungsbeispiel ist der Querschnitt des Montagestutzens 32 kreisrund (Fig. 5). Es kann auch zweckmäßig sein, den Querschnitt andersförmig, beispielsweise oval, rechteckig, etc. auszubilden. Der Montagestutzen 32 umfasst eine Umfangswand 41 mit einer der Außenumgebung 29 zugewandten Außenfläche 42 und mit einer der Außenfläche 42 abgewandten Innenfläche 43. In dem Montagestutzen 32 ist die erste Schutzvorrichtung 10 angeordnet. Die erste Schutzvorrichtung 10 ist derart ausgebildet, dass es dem Bediener nicht möglich ist, mit seiner Hand durch den Montagestutzen 32 hindurchzugreifen.

Wie in Fig. 4 gezeigt, umfasst die erste Schutzvorrichtung 10 im Ausführungsbeispiel zwei Rippen 11, 15, nämlich eine Rippe 11 und eine weitere Rippe 15. Die zwei Rippen 11, 15 sind jeweils an ihren Enden an der Innenfläche 42 der Umfangswand 41 des Montagestutzens 32 befestigt. Die Rippen 11, 15 sind in Blickrichtung koaxial auf den Montagestutzen 32 vorzugsweise geradlinig ausgebildet und bilden Sehnen des Kreisquerschnittes des Montagestutzens 32 (Fig. 5). In einer alternativen Ausführung der ersten Schutzvorrichtung 10 können die Rippen 11, 15 auch bogenförmig ausgebildet sein. Im Ausführungsbeispiel besitzen die zwei Rippen 11, 15 jeweils eine Längsrichtung 12, 12' (Fig. 5), wobei die Längsrichtung 12 der einen Rippe 11 verschieden von der Längsrichtung 12' der weiteren Rippe 15 ist. Die zwei Rippen 11, 15 laufen in einem Verbindungspunkt 22 zusammen, wodurch sich deren Längsrichtungen 12, 12' in dem Verbindungspunkt 22 schneiden. Somit bilden die zwei Rippen 11, 15 ein Schutzgitter. Es kann auch zweckmäßig sein, die beiden Rippen 11, 15 derart in dem Montagestutzen 32 anzuordnen, dass sich diese sich nicht kontaktieren.

Wie in Fig. 5 gezeigt, ist die Längsrichtung 12' der weiteren Rippe 15 quer, insbesondere orthogonal zu der Längsrichtung 12 der einen Rippe 11 ausgerichtet. Der Verbindungspunkt 22 der zwei Rippen 11, 15 liegt vorzugsweise in etwa im Mittelpunkt des Querschnitts des Montagestutzens 32. Selbstverständlich kann die erste Schutzvorrichtung 10 auch aus lediglich einer einzigen Rippe 11 gebildet sein. Verläuft die eine Rippe 11 in etwa durch den Mittelpunkt 45 des Querschnitts des Montagestutzens 32, wird der Bediener ebenfalls durch die eine Rippe 11 gehindert, über den Montagestutzen 32 in den Innenraum 28 des Arbeitsgerätes 1 zu greifen. Zudem ist es selbstverständlich, dass die erste Schutzvorrichtung 10 auch aus mehr als zwei Rippen 11, 15 gebildet sein kann.

Wie in Fig. 5 gezeigt, umfasst die eine Rippe 11 mindestens einen Rippenabschnitt 13, 14. Im bevorzugten Ausführungsbeispiel umfasst die eine Rippe 11 zwei Rippenabschnitte 13, 14, nämlich einen ersten Rippenabschnitt 13 und einen zweiten Rippenabschnitt 14. Es kann auch zweckmäßig sein, mehr als zwei Rippenabschnitte 13, 14 vorzusehen. Ein Rippenabschnitt 13, 14 erstreckt sich entlang der Längsrichtung 12 der einen Rippe 11 von einem ersten Ende 18 bis zu einem zweiten Ende 19. Im Ausführungsbeispiel liegt das erste Ende 18 des ersten Rippenabschnitts 13 an der Umfangswand 41, das zweite Ende 19 des ersten Rippenabschnitts 13 an dem Verbindungspunkt 22 der zwei Rippen 11, 15. Im Ausführungsbeispiel liegt das erste Ende 18' des zweiten Rippenabschnitts 14 an dem Verbindungspunkt 22 der zwei Rippen 11, 15, das zweite Ende 19' des zweiten Rippenabschnitts 14 an der Umfangswand 41. Ein Rippenabschnitt 13, 14 kann je nach äußerer Anregung in seinen Eigenmoden zum Schwingen angeregt werden, wobei die Enden 18, 18', 19, 19' der Rippenabschnitte 13, 14 die Einhängepunkte eines schwingenden Rippenabschnittes 13, 14 bilden. Jeder Rippenabschnitt 13, 14 besitzt für sich genommen eigene Eigenfrequenzen.

Wie in Fig. 5 gezeigt, ist auf mindestens einem Rippenabschnitt 13, 14 der ersten Schutzvorrichtung 10 ein translatorisch schwingbarer Störkörper 20 angeordnet. Als ein translatorisch schwingbarer Störkörper 20 ist ein Störkörper zu verstehen, der zumindest translatorisch schwingen kann. Es ist auch möglich, dass der translatorische schwingbare Störkörper zusätzlich auch rotatorisch schwingbar ist. Ein Verbindungspunkt 22 zweier Rippen 11, 15 bildet hingegen keinen Störkörper 20, da die Rippen 11, 15 sich gegenseitig derart versteifen, dass eine translatorische Schwingung des Verbindungspunktes 22 im Sinne dieser Anmeldung nicht möglich ist. Eine rotatorische Schwingung der Verbindungspunkte 22 ist hingegen möglich. Der Störkörper 20 bildet mit dem mindestens einen Rippenabschnitt 13, 14 ein Schwingungssystem 21 mit einer Systemeigenfrequenz, wobei die Systemeigenfrequenz und die Eigenfrequenz des Rippenabschnitts 13, 14 verschieden sind. Die erste Schutzvorrichtung 10 ist im Montagestutzen 32 angeordnet, wodurch der Luftstrom 9 mit hoher Strömungsgeschwindigkeit die erste Schutzvorrichtung 10 passiert. Der Luftstrom 9 bildet eine äußere Anregung der schwingungsfähigen Rippenabschnitte 13, 14. Durch den Störkörper 20 wird ein Schwingungssystem 21 gebildet, dessen Systemeigenfrequenzen verschieden gegenüber der Erregerfrequenz der äußeren Anregung ist. Somit werden Resonanzen an den Rippenabschnitten 13, 14, die zu einem hohen Geräuschpegel führen, vermieden. Folglich bewirkt ein Störkörper 20 eine Frequenzverschiebung.

Wie in Fig. 5 gezeigt, ist die weitere Rippe 15 durch den Verbindungspunkt 22 ebenfalls in zwei Rippenabschnitte 16, 17, nämlich einen oberen Rippenabschnitt 16 und einen unteren Rippenabschnitt 17 unterteilt. Somit sind im Ausführungsbeispiel vier Rippenabschnitte 13, 14, 16, 17 vorgesehen, wobei an jedem Rippenabschnitt 13, 14, 16, 17 mindestens ein Störkörper 20 angeordnet ist. Es kann in einem alternativen Ausführungsbeispiel zweckmäßig sein, lediglich an einem, vorzugsweise an lediglich zwei, insbesondere an lediglich drei Rippenabschnitten 13, 14, 16, 17 Störköper 20 vorzusehen.

Wie in Fig. 5 gezeigt, ist im Ausführungsbeispiel am ersten Rippenabschnitt 13 der einen Rippe 11 lediglich ein Störkörper 20 und am zweiten Rippenabschnitt 14 der einen Rippe 11 lediglich zwei Störkörper 20 vorgesehen. Dadurch ist die Masse des Schwingungssystems 21 bestehend aus dem ersten Rippenabschnitt 13 und einem Störkörper 20 gegenüber dem Schwingungssystem 21' bestehend aus dem zweiten Rippenabschnitt 14 und zwei Störkörpern 20 verschieden. Der Verbindungspunkt 22 ist zwar translatorisch fixiert, bildet jedoch einen Kopplungspunkt beider Schwingungssysteme 21, 21', welcher rotatorische Schwingungen überträgt. Durch die verschiedenen Massen beider Schwingungssysteme 21, 21' wirken diese aufeinander schwingungsreduzierend.

Wie in Fig. 5 gezeigt, ist an dem unteren Rippenabschnitt 17 der weiteren Rippe 15 lediglich ein Störkörper 20 angeordnet. An dem oberen Rippenabschnitt 16 der weiteren Rippe 15 sind hingegen lediglich zwei Störkörper 20 angeordnet, wonach die Massen beider Schwingungssysteme 21", 21‴ verschieden sind. Somit stellt sich analog obiger Ausführung ebenfalls ein schwingungsreduzierender Effekt ein. Im bevorzugten Ausführungsbeispiel weisen die Rippenabschnitte 13, 14, 16, 17 jeweils einer Rippe 11, 15 verschieden viele Störkörper 20 auf. Dadurch sind die Massen der Schwingungssysteme 21, 21', 21", 21‴ einer Rippe 11, 15 verschieden.

Es kann auch vorgesehen sein, dass die Störkörper 20 einer Rippe 11, 15 verschieden große Massen aufweisen. Dadurch können die Schwingungssysteme 21, 21', 21", 21‴ einer Rippe 11, 15 auch bei gleicher Anzahl Störkörpern 20 mit verschieden großen Massen ausgebildet werden. Selbstverständlich können sowohl die Anzahl der Störkörper 20 auf den jeweiligen Rippenabschnitten 13, 14, 16, 17 einer Rippe 11, 15 als auch die Masse der einzelnen Störkörper 20 auf den Rippenabschnitten 13, 14, 16, 17 einer Rippe 11, 15 verschieden sein.

Wie in Fig. 5 gezeigt, ist ein Störkörper 20 als eine Erhebung auf einem Rippenabschnitt 13, 14, 16, 17 ausgebildet. Die Rippen 11, 15 weisen für sich genommen einen vorzugsweise entlang ihrer Längsrichtung 12 konstanten Rippenquerschnitt auf. Somit ist vorzugsweise als Störkörper 20 jene Erhebung zu verstehen, die über den konstanten Rippenquerschnitt hinausragt. Der Störkörper 20 ist vorzugsweise als eine längliche, insbesondere stäbchenförmige Erhebung auf dem Rippenabschnitt 13, 14, 16, 17 ausgebildet.

Wie in Fig. 6 gezeigt, erstreckt sich der Störkörper 20 von seinem ersten Längsende 25 zu seinem zweiten Längsende 26 in eine Längsrichtung 27. Die Störkörper 20 sind vorzugsweise derart auf den Rippenabschnitten 13, 14, 16, 17 angeordnet, dass die Längsrichtung 27 des Störkörpers 20 in etwa parallel zur Strömungsrichtung der Luftströmung 9 ausgerichtet ist. Somit ist der Strömungswiderstand des Störkörpers 20 gering. Um den Strömungswiderstand des Störkörpers 20 weiter zu reduzieren, sind die Längsenden 25, 26 des Störkörpers 20 aerodynamisch, insbesondere tropfenförmig abgerundet.

Um die Masse der Störkörper 20 zu modifizieren, können diese geometrisch verschieden ausgebildet sein. Somit kann es vorteilhaft sein, dass die Störkörper 20 unterschiedliche sich in Längsrichtung 27 der Störkörper 20 erstreckende Längen und unterschiedliche Breiten aufweisen. Es kann auch vorgesehen sein, dass die Störkörper 20 aus verschiedenen Werkstoffen bestehen und somit ebenfalls unterschiedliche Massen aufweisen. Im bevorzugten Ausführungsbeispiel sind die Störkörper 20 jedoch aus dem gleichen Material, insbesondere aus Kunststoff, wie die Rippen 11, 15 ausgebildet, wodurch die Schutzvorrichtung 10 auf einfache Weise fertigbar ist. Die Schutzvorrichtung 10 ist vorzugsweise als Spritzgussteil ausgebildet. Der Störkörper 20 und die Rippe 11 sind vorzugsweise einteilig ausgebildet. Vorzugsweise ist die Schutzvorrichtung 10 einteilig ausgebildet. Die Masse des Störkörpers 20 entspricht mindestens 2%, insbesondere mindestens 5%, vorzugsweise in etwa 8% der Masse einer Rippe 11, 15. Vorzugsweise bewirkt die Anordnung eines Störkörpers 20 auf einem Rippenabschnitt 13, 14, 16, 17 einer Rippe 11, 15 eine Eigenfrequenzverschiebung von mindestens 2%, vorzugsweise von mindestens 5%, vorteilhaft von in etwa 10% bezogen auf die erste und zweite Harmonische des jeweiligen Rippenabschnittes 13, 14, 16, 17.

Grundsätzlich sind die Störkörper 20 auf den einzelnen Rippenabschnitten 13, 14, 16, 17 in Anzahl und Position derart zu wählen, dass die Eigenfrequenzen der Schwingungssysteme 21, 21', 21", 21‴ derart modifiziert werden, dass diese mit den Erregerfrequenzen des Luftstroms 9 keine Resonanzen bilden. Hierbei hat es sich als vorteilhaft erwiesen, dass die Schwingungssysteme 21, 21', 21", 21‴ zueinander benachbarter Rippenabschnitte 13, 14, 16, 17 vorzugweise verschiedene Massen oder/und verschiedene relative Massenschwerpunkte besitzen. Dadurch wird ein gemeinsames Schwingen über den Verbindungpunkt 22 unterbunden.

Wie in Fig. 5 gezeigt, weisen die zwei Rippen 11, 15 jeweils eine Oberseite 23, 23' und eine der Oberseite 23, 23' gegenüberliegende Unterseite 24, 24' auf. Im Ausführungsbeispiel ist mindestens ein Störkörper 20 auf der Oberseite 23, 23' und mindestens ein Störkörper 20 auf der Unterseite 24, 24' der zwei Rippen 11, 15 angeordnet. An dem ersten Rippenabschnitt 13 der einen Rippe 11 ist ein Störkörper 20 auf der Oberseite 23 der einen Rippe 11 angeordnet. An dem zweiten Rippenabschnitt 14 der einen Rippe 11 ist ein Störkörper 20 auf der Unterseite 24 der einen Rippe 11, bevorzugt ein zusätzlicher Störkörper 20 auch auf der Oberseite 23 der einen Rippe 11 angeordnet. Zudem ist an dem unteren Rippenabschnitt 16 der weiteren Rippe 15 ein Störkörper 20 auf der Oberseite 23' der weiteren Rippe 15 angeordnet. An dem oberen Rippenabschnitt 17 ist ein Störkörper 20 auf der Unterseite 24' der weiteren Rippe 15, bevorzugt zusätzlich ein Störkörper 20 auf der Oberseite 24' der weiteren Rippe 15 angeordnet. Demnach ist im Ausführungsbeispiel die Anzahl der Störkörper 20 für benachbarte Rippenabschnitte 13, 14, 16, 17 einer Rippe 11, 15 vorzugsweise verschieden. Ferner ist es vorteilhaft, die Störkörper 20 zweier benachbarter Rippenabschnitte 13, 14, 16, 17 auch auf verschiedenen Seiten 23, 23', 24, 24' der Rippen 11, 15 anzuordnen.

Wie in den Figuren 5 und 6 gezeigt, sind die Störkörper 20 benachbarter Rippenabschnitte 13, 14, 16, 17 einer Rippe 11, 15 im Ausführungsbeispiel asymmetrisch zueinander bezüglich einer auf eine orthogonal zur jeweiligen Rippe 11, 15 ausgerichteten und den Verbindungpunkt 22 schneidenden Ebene 46 angeordnet. Die Ebene 46 verläuft parallel zur Längsrichtung 27 der Störkörper 20. In anderen Worten ist der Abstand a, a', b, b' gemessen in Längsrichtung 12 der jeweiligen Rippe 11, 15 zweier Störkörper 20, die auf benachbarten Rippenabschnitten 13, 14, 16, 17 angeordnet sind, verschieden.

Wie in Fig. 6 gezeigt, ist der Störkörper 20 im bevorzugten Ausführungsbeispiel derart auf dem Rippenabschnitt 13, 14, 16, 17 angeordnet, dass in Blickrichtung senkrecht auf die Oberseite 23, 23' der Rippe 11, 15 der Störkörper 20 innerhalb der Rippe 11, 15 angeordnet ist. Demnach steht der Störkörper 20 nicht über die Rippe 11, 15 über. Es kann in einer alternativen Ausführung auch zweckmäßig sein, den Störkörper 20 derart auf der Rippe 11, 15 auszubilden, dass der Störkörper 20 über die Rippe 11, 15 heraussteht.

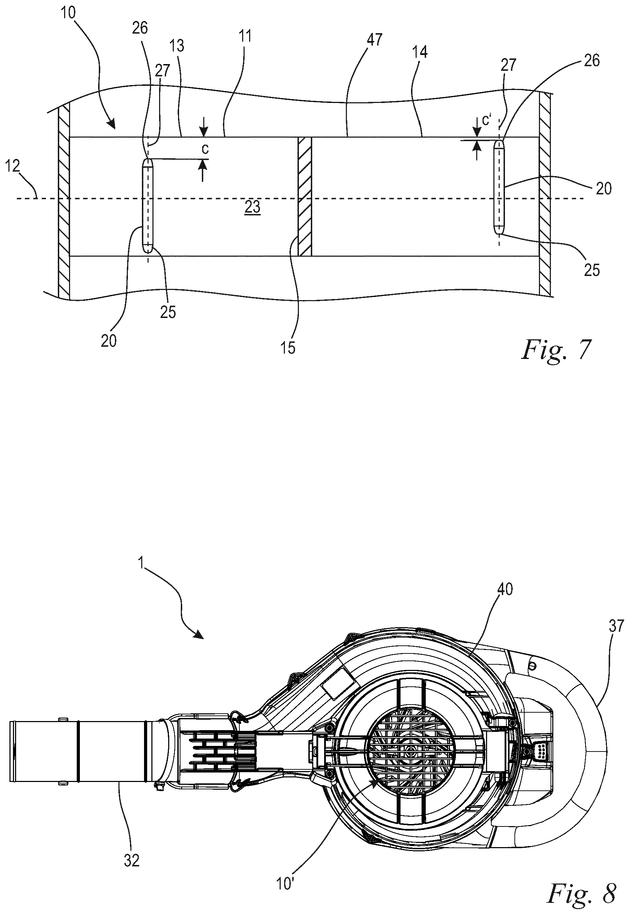

Wie in Fig. 7 gezeigt, können die Störkörper 20 auch hinsichtlich deren Längsrichtung 27 verschieden positioniert werden. Die Rippen 11, 15 weisen eine dem Luftstrom 9 zugewandte Strömungskante 47 auf. Die Strömungskante 47 verläuft im bevorzugten Ausführungsbeispiel parallel zur Längsrichtung 12 einer Rippe 11, 15. Die Störkörper 20 weisen einen Abstand c, c' zur Strömungskante 47 auf. Der Abstand c, c' zweier Störkörper 20, die auf zueinander benachbarten Rippenabschnitten 13, 14, 16, 17 einer Rippe 11, 15 angeordnet sind, sind im bevorzugten Ausführungsbeispiel verschieden.

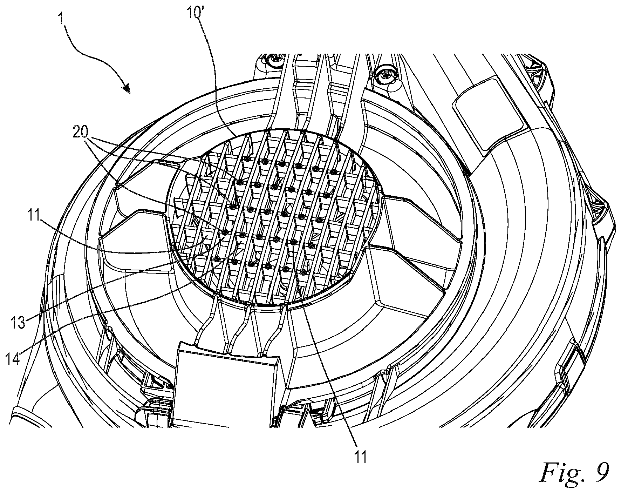

In Figur 8 ist das Arbeitsgerät 1 in einer Ansicht von unten gezeigt. In dieser Ansicht ist die zweite Schutzvorrichtung 10' zu erkennen. Die zweite Schutzvorrichtung 10' ist als ein Ansauggitter ausgebildet und deutlich feinmaschiger als die erste Schutzvorrichtung 10 ausgebildet. Auch bei feinmaschigen Schutzvorrichtungen 10' kann es zu erhöhten Geräuschemissionen aufgrund auftretender Resonanzschwingungen kommen. Wie in Fig. 9 schematisch angedeutet, können die Rippenabschnitte der Rippen ebenfalls mit Störkörpern 20 versehen werden. Bei Anzahl und Positionierung der Störkörpern 20 auf den Rippenabschnitten gelten die hinsichtlich der ersten Schutzvorrichtung 10 ausgeführten Prinzipien, die auch auf die zweite Schutzvorrichtung 10' übertragbar sind. Grundsätzlich gilt, dass an jeder Schutzvorrichtung, insbesondere an jedem Schutzgitter, eines Arbeitsgerätes 1, an dem Luftströme eine Fremderregung bewirken und einzelne Rippen oder Rippenabschnitte zum Schwingen anregen, entsprechende Störkörper 20 vorgesehen werden können. Dies gilt insbesondere auch für Kühlluftgitter für einen Kühlluftstrom für den Antriebsmotor 4.

## Patentansprüche

1. Schutzvorrichtung (10, 10') für einen Ansaug- oder Blaskanal eines Arbeitsgerätes,
wobei die Schutzvorrichtung (10, 10') mindestens eine Rippe (11) mit einer Längsrichtung (12) umfasst, wobei die mindestens eine Rippe (11) mindestens einen Rippenabschnitt (13, 14) aufweist, wobei sich der Rippenabschnitt (13, 14) entlang der Längsrichtung (12) der Rippe (11) von einem ersten Ende (18) bis zu einem zweiten Ende (19) erstreckt und für sich alleine genommen eine Eigenfrequenz aufweist,
**dadurch gekennzeichnet, dass** an dem Rippenabschnitt (13, 14) zwischen dem ersten Ende (18) und dem zweiten Ende (19) ein mit dem Rippenabschnitt (13, 14) translatorisch schwingbarer Störkörper (20) angeordnet ist,
und dass der Rippenabschnitt (13, 14) und der Störkörper (20) ein Schwingungssystem (21) mit einer Systemeigenfrequenz bilden, wobei die Systemeigenfrequenz und die Eigenfrequenz des Rippenabschnitts (13, 14) verschieden sind.

2. Schutzvorrichtung nach Anspruch 1,
**dadurch gekennzeichnet, dass** die Schutzvorrichtung (10, 10') als ein Schutzgitter ausgebildet ist und mindestens eine weitere Rippe (15) umfasst, wobei sich die weitere Rippe (15) und die mindestens eine Rippe (11) in einem Verbindungspunkt (22) schneiden.

3. Schutzvorrichtung nach Anspruch 2,
**dadurch gekennzeichnet, dass** die weitere Rippe (15) quer, insbesondere orthogonal, zur mindestens einen Rippe (11) ausgerichtet ist.

4. Schutzvorrichtung nach Anspruch 2 oder 3,
**dadurch gekennzeichnet, dass** durch den Verbindungspunkt (22) die mindestens eine Rippe (11) in einen ersten Rippenabschnitt (13) und in einen zweiten Rippenabschnitt (14) und die weitere Rippe (15) in einen oberen Rippenabschnitt (16) und einen unteren Rippenabschnitt (17) unterteil ist.

5. Schutzvorrichtung nach einem der Ansprüche 2 bis 4,
**dadurch gekennzeichnet, dass** an zwei, vorzugsweise drei, insbesondere vier Rippenabschnitten (13, 14, 16, 17) der Schutzvorrichtung jeweils mindestens ein Störkörper (20) vorgesehen ist.

6. Schutzvorrichtung nach einem der Ansprüche 2 bis 5,
**dadurch gekennzeichnet, dass** die Rippenabschnitte (13, 14, 16, 17) einer Rippe (11, 15) verschieden viele Störkörper (20) aufweisen.

7. Schutzvorrichtung nach Anspruch 5 oder 6,
**dadurch gekennzeichnet, dass** die Störkörper (20) verschieden große Massen aufweisen.

8. Schutzvorrichtung nach einem der Ansprüche 5 bis 7,
**dadurch gekennzeichnet, dass** die Störkörper (20) zweier Rippenabschnitte (13, 14, 16, 17) einer Rippe (11, 15) bezüglich einer orthogonal zur Rippe (11, 15) ausgerichteten und den Verbindungspunkt (21) schneidenden Ebene asymmetrisch zueinander angeordnet sind.

9. Schutzvorrichtung nach einem der Ansprüche 5 bis 8,
**dadurch gekennzeichnet, dass** die Rippe (11) eine Oberseite (23) und eine der Oberseite (23) gegenüberliegende Unterseite (24) aufweist, wobei ein Störkörper (20) des einen Rippenabschnittes (13, 14, 16, 17) einer Rippe (11, 15) auf der Oberseite (23) und ein Störkörper (20) des anderen Rippenabschnittes (13, 14, 16, 17) derselben Rippe (11, 15) auf der Unterseite (24) angeordnet ist.

10. Schutzvorrichtung nach einem der Ansprüche 1 bis 9,
**dadurch gekennzeichnet, dass** die Masse des Störkörpers (20) mindestens 2%, insbesondere mindestens 5%, vorzugsweise in etwa 8% der Masse der Rippe (11, 15) entspricht.

11. Schutzvorrichtung nach Anspruch 9 oder 10,
**dadurch gekennzeichnet, dass** der Störkörper (20) derart auf dem Rippenabschnitt (13, 14, 16, 17) angeordnet ist, dass in Blickrichtung senkrecht auf die Oberseite (23) der Rippe (11, 15) der Störkörper (20) innerhalb der Rippe (11, 15) angeordnet ist.

12. Schutzvorrichtung nach einem der Ansprüche 1 bis 11,
**dadurch gekennzeichnet, dass** der Störkörper (20) sich in eine Längsrichtung erstreckt, wobei die Längsenden (25, 26) des Störkörpers (20) aerodynamisch vorteilhaft abgerundet sind.

13. Schutzvorrichtung nach einem der Ansprüche 1 bis 12,
**dadurch gekennzeichnet, dass** die Rippe (11, 15) und der mindestens eine Störkörper (20) einteilig ausgebildet sind.

14. Schutzvorrichtung nach einem der Ansprüche 1 bis 13,
**dadurch gekennzeichnet, dass** die Rippe (11, 15) und der Störkörper (20) aus dem gleichen Material, insbesondere aus Kunststoff, bestehen.

15. Handgeführtes Arbeitsgerät mit einer Schutzvorrichtung (10, 10') nach einem der Ansprüche 1 bis 14.

## Claims

1. Protective device (10, 10') for an intake or blowing channel of a piece of equipment,
wherein the protective device (10, 10') comprises at least one rib (11) with a longitudinal direction (12), wherein the at least one rib (11) has at least one rib portion (13, 14), wherein the rib portion (13, 14) extends along the longitudinal direction (12) of the rib (11) from a first end (18) as far as a second end (19) and, by itself, has a natural frequency,
**characterized in that** arranged on the rib portion (13, 14) between the first end (18) and the second end (19) is a disturbance body (20) which is able to vibrate translationally with the rib portion (13, 14),
and **in that** the rib portion (13, 14) and the disturbance body (20) form a vibratory system (21) with a system natural frequency, wherein the system natural frequency and the natural frequency of the rib portion (13, 14) are different.

2. Protective device according to Claim 1,
**characterized in that** the protective device (10, 10') is designed as a protective grid and comprises at least one further rib (15), wherein the further rib (15) and the at least one rib (11) cross at a connection point (22).

3. Protective device according to Claim 2,
**characterized in that** the further rib (15) is oriented transversely, in particular orthogonally, to the at least one rib (11).

4. Protective device according to Claim 2 or 3,
**characterized in that,** by way of the connection point (22), the at least one rib (11) is subdivided into a first rib portion (13) and a second rib portion (14) and the further rib (15) is subdivided into an upper rib portion (16) and a lower rib portion (17).

5. Protective device according to one of Claims 2 to 4,
**characterized in that** provision is made on two, preferably three, in particular four, rib portions (13, 14, 16, 17) of the protective device of in each case at least one disturbance body (20).

6. Protective device according to one of Claims 2 to 5,
**characterized in that** the rib portions (13, 14, 16, 17) of a rib (11, 15) have a different number of disturbance bodies (20).

7. Protective device according to Claim 5 or 6,
**characterized in that** the disturbance bodies (20) have masses of different magnitude.

8. Protective device according to one of Claims 5 to 7,
**characterized in that** the disturbance bodies (20) of two rib portions (13, 14, 16, 17) of a rib (11, 15) are arranged asymmetrically with respect to one another in relation to a plane which is oriented orthogonally to the rib (11, 15) and contains the connection point (21).

9. Protective device according to one of Claims 5 to 8,
**characterized in that** the rib (11) has a top side (23) and a bottom side (24), which is situated opposite the top side (23), wherein a disturbance body (20) of one rib portion (13, 14, 16, 17) of a rib (11, 15) is arranged on the top side (23) and a disturbance body (20) of the other rib portion (13, 14, 16, 17) of the same rib (11, 15) is arranged on the bottom side (24).

10. Protective device according to one of Claims 1 to 9,
**characterized in that** the mass of the disturbance body (20) corresponds to at least 2%, in particular at least 5%, preferably approximately 8%, of the mass of the rib (11, 15).

11. Protective device according to Claim 9 or 10,
**characterized in that** the disturbance body (20) is arranged on the rib portion (13, 14, 16, 17) in such a way that, in a viewing direction perpendicular to the top side (23) of the rib (11, 15), the disturbance body (20) is arranged within the rib (11, 15).

12. Protective device according to one of Claims 1 to 11,
**characterized in that** the disturbance body (20) extends in a longitudinal direction, wherein the longitudinal ends (25, 26) of the disturbance body (20) are aerodynamically advantageously rounded.

13. Protective device according to one of Claims 1 to 12,
**characterized in that** the rib (11, 15) and the at least one disturbance body (20) are of one-part form.

14. Protective device according to one of Claims 1 to 13,
**characterized in that** the rib (11, 15) and the disturbance body (20) consist of the same material, in particular of plastic.

15. Hand-held piece of equipment having a protective device (10, 10') according to one of Claims 1 to 14.

## Revendications

1. Dispositif de protection (10, 10') pour un canal d'aspiration ou de soufflage d'un appareil de travail,
dans lequel le dispositif de protection (10, 10') comprend au moins une nervure (11) d'une direction longitudinale (12), dans lequel ladite au moins une nervure (11) présente au moins une partie de nervure (13, 14), dans lequel la partie de nervure (13, 14) s'étend le long de la direction longitudinale (12) de la nervure (11) d'une première extrémité (18) à une deuxième extrémité (19) et présente à elle seule une fréquence de résonance,
**caractérisé en ce qu'**un déflecteur (20) pouvant osciller en translation avec la partie de nervure (13, 14) est disposé sur la partie de nervure (13, 14) entre la première extrémité (18) et la deuxième extrémité (19),
et **en ce que** la partie de nervure (13, 14) et le déflecteur (20) constituent un système d'oscillation (21) d'une fréquence de résonance de système, dans lequel la fréquence de résonance du système et la fréquence de résonance de la partie de nervure (13, 14) sont différentes.

2. Dispositif de protection selon la revendication 1,
**caractérisé en ce que** le dispositif de protection (10, 10') est réalisé sous la forme d'une grille de protection et comprend au moins une nervure supplémentaire (15), dans lequel la nervure supplémentaire (15) et ladite au moins une nervure (11) se croisent dans un point de jonction (22).

3. Dispositif de protection selon la revendication 2,
**caractérisé en ce que** la nervure supplémentaire (15) est orientée transversalement, en particulier orthogonalement, par rapport à ladite au moins une nervure (11).

4. Dispositif de protection selon la revendication 2 ou 3,
**caractérisé en ce que** le point de jonction (22) divise ladite au moins une nervure (11) en une première partie de nervure (13) et en une deuxième partie de nervure (14), et divise la nervure supplémentaire (15) dans une partie de nervure supérieure (16) et une partie de nervure inférieure (17).

5. Dispositif de protection selon l'une quelconque des revendications 2 à 4,
**caractérisé en ce que** respectivement au moins un déflecteur (20) est prévu sur deux, de préférence trois, en particulier quatre sections de nervure (13, 14, 16, 17) du dispositif de protection.

6. Dispositif de protection selon l'une quelconque des revendications 2 à 5,
**caractérisé en ce que** les sections de nervure (13, 14, 16, 17) d'une nervure (11, 15) présentent un nombre différent de déflecteurs (20).

7. Dispositif de protection selon la revendication 5 ou 6,
**caractérisé en ce que** les déflecteurs (20) présentent des masses de grandeur différente.

8. Dispositif de protection selon l'une quelconque des revendications 5 à 7,
**caractérisé en ce que** les déflecteurs (20) de deux parties de nervure (13, 14, 16, 17) d'une nervure (11, 15) sont disposés de manière asymétrique l'un par rapport à l'autre par rapport à un plan orienté de manière orthogonale à la nervure (11, 15) et croisant le point de jonction (21).

9. Dispositif de protection selon l'une quelconque des revendications 5 à 8,
**caractérisé en ce que** la nervure (11) présente une face supérieure (23) et une face inférieure (24) opposée à la face supérieure (23), dans lequel un déflecteur (20) de ladite une partie de nervure (13, 14, 16, 17) d'une nervure (11, 15) est disposé sur la surface supérieure (23) et un déflecteur (20) de l'autre partie de nervure (13, 14, 16, 17) de la même nervure (11, 15) est disposé sur la face inférieure (24).

10. Dispositif de protection selon l'une quelconque des revendications 1 à 9,
**caractérisé en ce que** la masse du déflecteur (20) correspond à au moins 2 %, en particulier à au moins 5 %, de préférence approximativement à 8 % de la masse de la nervure (11, 15).

11. Dispositif de protection selon la revendication 9 ou 10,
**caractérisé en ce que** le déflecteur (20) est disposé sur la partie de nervure (13, 14, 16, 17) de telle sorte que dans la direction de visée, perpendiculairement à la face supérieure (23) de la nervure (11, 15), le déflecteur (20) est disposé à l'intérieur de la nervure (11, 15).

12. Dispositif de protection selon l'une quelconque des revendications 1 à 11,
**caractérisé en ce que** le déflecteur (20) s'étend dans une direction longitudinale, dans lequel les extrémités longitudinales (25, 26) du déflecteur (20) sont arrondies de manière avantageuse sur le plan aérodynamique.

13. Dispositif de protection selon l'une quelconque des revendications 1 à 12,
**caractérisé en ce que** la nervure (11, 15) et ledit au moins un déflecteur (20) sont réalisés d'un seul tenant.

14. Dispositif de protection selon l'une quelconque des revendications 1 à 13,
**caractérisé en ce que** la nervure (11, 15) et le déflecteur (20) sont composés du même matériau, en particulier d'une matière plastique.

15. Appareil de travail à main, comprenant un dispositif de protection (10, 10') selon l'une quelconque des revendications 1 à 14.
